# EUROPÄISCHE PATENTSCHRIFT

(11) **EP 2 535 543 B1**
(45) Veröffentlichungstag und Bekanntmachung des Hinweises auf die Patenterteilung: **10.08.2016**
(21) Anmeldenummer: 12171338.2
(22) Anmeldetag: 08.06.2012
(51) Int. Cl.: F02C 7/232, F02C 9/36

(54) **Verfahren zum Betrieb einer Brennstoffversorgung für eine Wärmekraftmaschine**
Method for operating a fuel supply for a heat engine
Procédé de fonctionnement d'une alimentation en carburant pour un moteur thermique

(30) Priorität: 17.06.2011 CH 10292011
(43) Veröffentlichungstag der Anmeldung: 19.12.2012
(73) Patentinhaber: ALSTOM Technology Ltd, 5400 Baden (CH)
(72) Erfinder: Engesser, Hermann, 5406 Baden-Rütihof (CH)
(74) Vertreter: Bernotti, Andrea

(56) Entgegenhaltungen:
- EP-A1- 0 915 240
- DE-A1- 2 238 727
- DE-B- 1 162 636
- US-A1- 2008 115 483

## Beschreibung

### Technisches Gebiet

Die Erfindung bezieht sich auf ein Verfahren zum Betreiben einer Brennstoffversorgung für eine Wärmekraftmaschine gemäss Anspruch 1.

### Stand der Technik

Wärmekraftmaschinen, allen voran Gasturbinen- und/oder Dampfturbinenanlagen, die zumeist zur Stromerzeugung eingesetzt werden, unterliegen strengen Sicherheitsrichtlinien, die in normativen Regelwerken zusammengefasst sind. In diesem Zusammenhang sei auf den Betriebsstandard der ISO-Norm, ISO 21789, verwiesen, in welcher Anforderungen an die Sicherheit von Gasturbinenanlagen, die mit flüssigem oder gasförmigem Brennstoff betrieben werden, festgelegt sind. Im Besonderen betreffen die im Kapitel 5.10 der vorstehend bezeichneten ISO-Norm konkrete Anforderungen für eine betriebssichere Brennstoffbereitstellung für den Betrieb einer unter hohen Arbeitsdruck stehenden Brenneranordnung, in der hoch verdichtete Verbrennungsluft mit flüssigem und/oder gasförmigem Brennstoff zur Mischung unter Ausbildung eines zündfähigen Brennstoffluftgemisches gebracht werden. In modernen Gasturbinenanlagen treten innerhalb des Verbrennungsprozesses Arbeitsdrücke von mehr als 30 bar auf, die besondere Vorkehrungen für eine sichere Brennstoffeinspeisung in den Verbrennungsprozess erfordern. Insbesondere in Fällen, in denen die Brennstoffzuführung kurzfristig unterbrochen werden muss, oder eine Umstellung von einer Brennstoffart zur anderen (flüssig, gasförmig oder umgekehrt) erfolgt, gilt es, dafür Sorge zu tragen, dass keine unkontrollierten Rückzündungen längs der Brennstoffzuleitung oder anderweitige unkontrollierte Brennstoffverpuffungen erfolgen. Zur Vermeidung derartiger irregulärer Verbrennungserscheinungen ist längs der Brennstoffzuleitung ein speziell ausgebildetes Sicherheits-Ventilsystem vorgesehen, ein so genanntes doppeltes Ablass- und Absperrventil-System, das für eine sichere Brennstoffunterbrechung sorgt, sowohl in Fällen eines kontrollierten Abschaltens der Gasturbinenanlage als auch in Notfällen Der Aufbau sowie die Betriebsweise eines derartigen doppelten Ablass- und Absperrventils ist in der vorstehend zitierten ISO-Norm, ISO 21789 in Kapitel 5.10.5 im Einzelnen beschrieben.

In der bisher gängigen Praxis zur Durchführung einer Schnellabschaltung des Verbrennungsprozesses 3 wird die Brennstoffzufuhr durch simultanes Schliessen eines Absperrventils- und Steuerventils unterbunden, wodurch ein unter Arbeitsdruckbedingungen des Verbrennungsprozesses stehender Brennstoffanteil innerhalb eines Leitungsbereiches der Brennstoff- und Ablassleitung eingeschlossen wird, der von dem jeweils geschlossenen Absperr-, Steuer- und Ablassventil einseitig begrenzt wird. Im Weiteren sei angenommen, dass dieser Leitungsbereich ein Brennstoffvolumen von V1 einschliesst.

Nach erfolgtem Schliessen des Absperrventils und Steuerventils wird das Ablassventil geöffnet, wodurch sich der druckbeaufschlagte Brennstoffanteil über die Ablassleitung in den Bereich des Drainageortes entleert. Handelt es sich bei dem Brennstoff beispielsweise um gasförmigen Brennstoff, so kann dieser über eine Art Kamin an einem sicheren Ort in die freie Atmosphäre entweichen.

Zwar wird auf diese Weise für eine sichere Entsorgung des Brennstoffanteils innerhalb des das Brennstoffvolumen V1 begrenzenden Leitungsbereiches gesorgt, jedoch verbleibt ein beträchtlicher weiterer Volumenanteil V2 an Brennstoff in der Brennstoffleitung, die sich stromab des Steuerventils und stromauf des Verbrennungsprozesses erstreckt. Dieser Restbrennstoffanteil kann zu unerwünschten Zünd- bzw. Verbrennungsreaktionen führen, die insbesondere im Falle von Brennstoffrückzündungen längs der Brennstoffleitung zu erheblichen Schädigungen führen können. Eben diese unkontrollierten Verbrennungsereignisse gilt es sicher auszuschliessen. Die gängigen Massnahmen zur Vermeidung derartiger unkontrollierter Verbrennungsereignisse sehen Spülungen der zum Verbrennungsprozess führenden Brennstoffleitung vor, bei denen bei geöffnetem Steuerventil über zusätzliche Spülleitungen Spülmedien, wie beispielsweise CO₂, N₂, Luft oder dergleichen, in die zum Verbrennungsprozess führende Brennstoffleitung eingespeist wird. Jedoch können derartige Spülmassnahmen zu weiteren Störungen des Verbrennungsprozesses beitragen resp. führen, durch die zumindest der Restbrennstoffanteil im Bereich der Brenneranordnung zur Verbrennung gebracht wird.

DE-B-1162636 zeigt ein Vorrichtung zum Entleeren der Brennstoffrücklaufleitungen von Gasturbinentriebwerken.

### Darstellung der Erfindung

Hier will die Erfindung Abhilfe schaffen. Der Erfindung, wie sie in den Ansprüchen gekennzeichnet ist, liegt die Aufgabe zugrunde, ein Verfahren zum Betreiben einer Brennstoffversorgung für eine Wärmekraftmaschine vorzuschlagen, bei welchem Rückzündung vom Verbrennungsprozess in die brennstoffführenden Leistungen unterbunden wird.

Zu diesem Zweck wird zum Betrieb des Verfahrens eine Brennstoffversorgung für eine Wärmekraftmaschine vorgesehen, welche im Wesentlichen aus mindestens einer zu einem Verbrennungsprozess führenden Brennstoffleitung besteht, und längs welcher mindestens eine Ventilgruppe angeordnet ist. Jede Ventilgruppe besteht aus mindestens einem Absperrventil und mindestens einem Steuerventil, wobei das Steuerventil dem Verbrennungsprozess näher liegend angeordnet ist. Die beiden Ventile begrenzen einen Brennstoffleitungsabschnitt, wobei von diesem Brennstoffleitungsabschnitt aus mindestens mit einem Ablassventil ausgerüstete Ablassleitung abzweigt, welche zu einem Drainageort führt.

Zur Aufrechterhaltung der Brennstoffversorgung für den Betrieb der Wärmekraftmaschine sind das Absperrventil und Steuerventil geöffnet, während das Ablassventil während dieser Phase geschlossen bleibt. Der Brennstoffleitungsabschnitt zwischen Absperrventil und Steuerventil und innerhalb der Ablassleitung bis zum Ablassventil bilden ein Brennstoffvolumen V1. Zur Unterbindung der Brennstoffversorgung und zur Leerung der stromauf des Verbrennungsprozesses befindlichen Brennstoffleitungen werden folgende Vorkehrungen in zeitlich aufeinander folgender Abfolge getroffen:
- Schritt 1:: Bei geschlossenem Ablassventil werden das Absperrventil und das Steuerventil geschlossen;
- Schritt 2:: Öffnen des Ablassventils und Entleeren des sich im Brennstoffleitungsabschnitt und Ablassleitung befindlichen Brennstoffvolumens (V1);
- Schritt 3:: Schliessen des Ablassventils;
- Schritt 4:: Öffnen des Steuerventils;
- Schritt 5.: Befüllen des Brennstoffvolumens (V1) durch einen druckgetriebenen Rückfluss des Brennstoffs aus dem Verbrennungsprozess;
- Schritt 6.: Schliessen des Steuerventils und anschliessendes Öffnen des Ablassventils zur Entleerung des befüllten Brennstoffvolumens (V1) nach Schritt 5.

Der hier zum Einsatz gelangende Brennstoff kann flüssig oder gasförmig sein, wobei dann in einem solchen Fall auch mehrere Brennstoffzuleitungen für die Brennstoffversorgung des Verbrennungsprozesses vorgesehen werden, welche typischerweise die gleichen Ventile wie oben dargelegt aufweisen.

Die genannten Ventile sollen einzeln, in Verbund, nacheinander oder interdependent zueinander betrieben werden können.

Die wesentlichen Vorteile der Erfindung sind darin zu sehen, dass im Falle einer gezielt herbeigeführten Brennstoffunterbrechung jegliche unkontrollierten Verbrennungs- bzw. Zündprozesse, allen voran Rückzündungen in die Brennstoffleitung, unterbunden werden können.

Auf die Einleitung von Spülmedien durch die zum Verbrennungsprozess führende Brennstoffleitung kann sonach verzichtet werden.

Vorteilhafte Ausführungsvarianten gehen aus den abhängigen Ansprüchen hervor.

### Kurze Erläuterung der Figur

Alle für das unmittelbare Verständnis der Erfindung nicht erforderlichen Elemente sind weggelassen worden. Es zeigt.

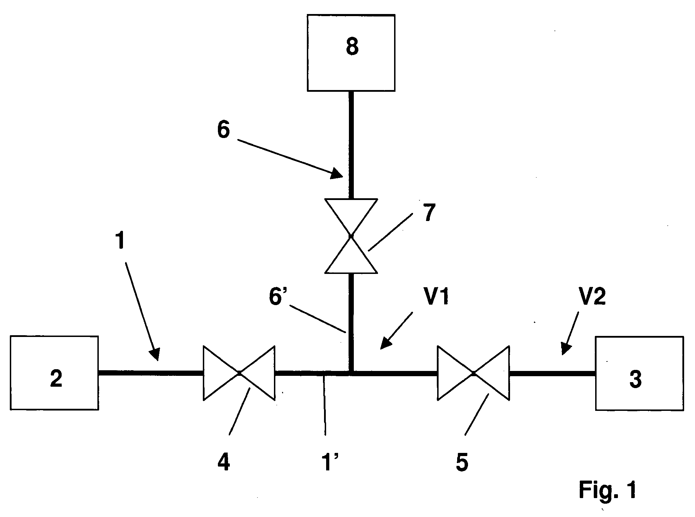

- Fig. 1: eine schematische Anordnung einer Brennstoffversorgung für eine Wärmekraftmaschine, wobei die Brennstoffversorgung im Wesentlichen aus mindestens einer zu einem Verbrennungsprozess führenden Brennstoffleitung besteht, längs welcher mindestens eine Ventilgruppe angeordnet ist.

### Wege zur Ausführung der Erfindung, gewerbliche Verwendbarkeit

Um den Verbrennungsprozess mit Brennstoff zu versorgen, ist eine Brennstoffleitung 1 vorgesehen, welche den Verbrennungsprozess 3 mit einem Brennstoffreservoir 2 verbindet. Längs der Brennstoffleitung 1 sind ein Absperr- und ein Steuerventil 4, 5 angeordnet.
Ferner zweigt längs der Brennstoffleitung 1 zwischen dem Absperrventil 4 und dem Steuerventil 5 eine Ablassleitung 6 ab, längs welcher ein Ablassventil 7 angeordnet ist. Die Ablassleitung 6 stromab des Absperrventils 7 mündet an einem Drainage-Ort 8, an dem für gewöhnlich atmosphärische Umgebungsdruckbedingungen vorherrschen.

Im Normalbetrieb, d.h. bei einer in Betrieb befindlichen Gasturbinenanlage, sind das Absperr- und Steuerventil 4, 5 geöffnet, wohingegen das Ablassventil 7 während dieser Phase geschlossen ist. Der Verbrennungsprozess 3 wird über die Brennstoffleitung 1 aus dem Brennstoffreservoir 2 durch entsprechende Ventilstellung des Steuerventils 5 kontrolliert mit Brennstoff versorgt, der zumindest an den innerhalb des Verbrennungsprozesses vorherrschenden Arbeitsdruck angepasst ist. Für gewöhnlich erfolgt die Brennstoffdosierung ausschliesslich über das Steuerventil 5, während das Absperrventil 4 im Betriebsfall vollständig geöffnet bleibt.

Die in Figur 1 illustrierte Ventilanordnung wird typischerweise als doppeltes Absperr- und Ablassventilsystem bezeichnet, da zwei die Brennstoffzufuhr blockierende Absperrventile, nämlich das Absperrventil 4 und das Steuerventil 5, vorhanden sind, wobei zusätzlich noch ein Ablassventil 7 vorgesehen ist.

In der bisher gängigen Praxis zur Durchführung einer Schnellabschaltung des Verbrennungsprozesses 3 wird die Brennstoffzufuhr durch simultanes Schliessen des Absperrventils 4 und Steuerventils 5 unterbunden, wodurch ein unter Arbeitsdruckbedingungen des Verbrennungsprozesses stehender Brennstoffanteil innerhalb eines Leitungsbereiches 1', 6' der Brennstoff- und Ablassleitung eingeschlossen wird, der von dem jeweils geschlossenen Absperr-, Steuer- und Ablassventil 4, 5, 7 einseitig begrenzt wird. So gesehen kann angenommen werden, dass dieser Leitungsbereich ein Brennstoffvolumen von V1 einschliesst.

Nach erfolgtem Schliessen des Absperrventils 4 und Steuerventils 5 wird das Ablassventil 7 geöffnet, wodurch sich der druckbeaufschlagte Brennstoffanteil innerhalb des Brennstoffvolumens V1 über die Ablassleitung 6 in den Bereich des Drainageortes 8 entleert. Handelt es sich bei dem Brennstoff beispielsweise um einen gasförmigen Brennstoff, so kann dieser über eine Art Kamin an einem sicheren Ort in die freie Atmosphäre entweichen.

Zwar wird auf diese Weise für eine sichere Entsorgung des Brennstoffanteils innerhalb des das Brennstoffvolumen V1 begrenzenden Leitungsbereiches 1', 6' gesorgt, jedoch verbleibt ein beträchtlicher weiterer Volumenanteil V2 an Brennstoff in der Brennstoffleitung, die sich stromab des Steuerventils 5 und stromauf des Verbrennungsprozesses 3 erstreckt. Dieser Restbrennstoffanteil kann zu unerwünschten Zünd- bzw. Verbrennungsreaktionen führen, die insbesondere im Falle von Brennstoffrückzündungen längs der Brennstoffleitung zu erheblichen Schädigungen führen können. Eben diese unkontrollierten Verbrennungsereignisse gilt es sicher auszuschliessen. Die gängigen Massnahmen zur Vermeidung derartiger unkontrollierter Verbrennungsereignisse sehen Spülungen der zum Verbrennungsprozess 3 führenden Brennstoffleitung vor, bei denen bei geöffnetem Steuerventil 5 über zusätzliche, nicht dargestellte Spülleitungen Spülmedien, wie beispielsweise CO₂, N₂, Luft oder dergleichen in die zum Verbrennungsprozess führende Brennstoffleitung eingespeist wird. Jedoch können derartige Spülmassnahmen zu weiteren Störungen des Verbrennungsprozesses beitragen, durch die zumindest der Restbrennstoffanteil im Bereich der Brenneranordnung zur Verbrennung gebracht wird. Deshalb wird erfindungsgemäss vorgeschlagen folgende Vorgehensart zu Grunde zu legen:
In einem 1. Schritt werden bei geschlossenem Ablassventil 7 das Absperrventil 4 und das Steuerventil 5 geschlossen.
In einem 2. Schritt wird das Ablassventil 7 geöffnet, so dass ein Entleeren des sich im Brennstoffleitungsabschnitt 1' und Ablassleitung 6' befindlichen Brennstoffvolumen V1 stattfinden kann.
In einem 3. Schritt erfolgt das Schliessen des Ablassventils 7.
In einem 4. Schritt wird das Steuerventil 5 geöffnet.
In einem 5. Schritt wird ein Befüllen des Brennstoffvolumens (V1) durch einen druckgetriebenen Rückfluss des Brennstoffs aus dem Verbrennungsprozess vorgenommen.
In einem 6. Schritt erfolgt dann ein Schliessen des Steuerventils 5 und ein anschliessendes Öffnen des Ablassventils 7 zur Entleerung des befüllten Brennstoffvolumens V1, dass sich dort auf Grund der Vornahme nach Schritt 5 gebildet hat.

Zu den einzelnen Schritten werden die folgenden Punktualisierung eingebracht:
Erfindungsgemäss ist das Verfahren dadurch charakterisiert, dass zum Zwecke der Unterbindung der Brennstoffzuführung die obigen Schritte 1-6 durchgeführt werden, welche eine Rückzündung und/oder Schädigung der brennstoffführenden Leitungen unterbinden.

Daraus ist ersichtlich, dass gleichsam dem Vorgehen wie beim vorstehend erläuterten Stand der Technik in einem ersten Schritt, das Absperr- und Steuerventil bei jeweils geschlossenem Ablassventil geschlossen werden.
Nach dem Schliessen des Absperr- und Steuerventils befindet sich, wie bereits beschrieben, längs des von dem Absperr- und Steuerventil beidseitig begrenzten

Brennstoffleitungs-Abschnittes sowie längs der Ablassleitung, die von der Brennstoffleitung einseitig abzweigt und andererseits vom Ablassventil 7 begrenzt ist, Brennstoff mit einem Brennstoffvolumen V1. Ferner befindet sich in der zum Verbrennungsprozess führenden Brennstoffleitung, die einseitig vom Steuerventil 5 begrenzt ist, Restbrennstoff mit einem Brennstoffvolumen V2. Der Leitungsdruck, der sowohl im Brennstoffvolumen V1 sowie auch im Brennstoffvolumen V2 vorherrscht, ist identisch und entspricht dem Brennstoffleitungsdruck, der für einen sicheren Betrieb der Wärmekraftmaschine, insbesondere zur Brennstoffeinspeisung in den Verbrennungsprozess, erforderlich ist.

In einem zweiten Schritt wird das Ablassventil 7 geöffnet, so dass sich der Brennstoff mit dem Brennstoffvolumen V1 gegenüber den atmosphärischen Umgebungsdruckbedingungen längs der Ablassleitung 6 am Drainage-Ort 8 entleert. Nach der Entleerung stellt sich innerhalb der Ablassleitung 6 sowie des Brennstoffleitungsabschnittes 1' der am Drainage-Ort 8 vorherrschende Druck, vorzugsweise der atmosphärische Umgebungsdruck, ein.

Im darauf folgenden dritten Schritt wird das Ablassventil 7 geschlossen und als 4. Schritt das Steuerventil 5 geöffnet. Aufgrund der zwischen den Brennstoffleitungen links und rechts zum Steuerventil vorherrschenden unterschiedlichen Leitungsdrücke erfolgt ein druckgetriebener Brennstoffrückfluss aus der zum Versorgungsprozess 3 führenden Brennstoffleitung in Richtung des Brennstoffleitungs-Abschnittes 1'. Während des Rückfliessens des Restbrennstoffes wird zusätzlich ein Anteil heisser Luft aus der Brenneranordnung durch die Brennstoffleitung angesaugt. Das Steuerventil 5 bleibt so lange geöffnet, bis sich das Brennstoffvolumen V1 durch druckgetriebenes Rückfliessen des Restbrennstoffes aus dem von dem Steuerventil zum Verbrennungsprozess führenden Brennstoffleitungs-Abschnitt gefüllt hat, womit das Befüllen als 5. Schritt abgeschlossen ist.

Im Anschluss daran wird in einem sechsten Schritt das Steuerventil 5 geschlossen. Nun kann das Ablassventil 7 geöffnet werden, um das Brennstoffvolumen V1 erneut längs der Ablassleitung 6 in Richtung des Drainage-Ortes 8 zu entleeren.

Typischerweise ist das von der vom Steuerventil 5 zum Verbrennungsprozess 3 führenden Brennstoffleitung eingeschlossene Brennstoffvolumen V2 grösser bzw. erheblich grösser, als das vorstehend bezeichnete Brennstoffvolumen V1. Somit ist es für eine vollständige Entleerung des verbleibenden Restbrennstoffanteil längs der zum Verbrennungsprozess 3 führenden Brennstoffleitung erforderlich, den erläuterten Rückführungsprozess, d.h. die vorstehend bezeichneten Schritte zwei bis vier mal zu wiederholen, vorzugsweise n= V2/V1 -fach zu wiederholen.

Das bedeutet, das Steuerventil 5 wird erneut geöffnet, sobald das Ablassventil 7 geschlossen ist und sich längs des Brennstoffleitungs-Abschnittes 1' bzw. 6' die am Drainage-Ort 8 vorherrschenden Druckbedingungen eingestellt haben. Erneut erfolgt ein Rückfliessen bzw. Ruckpumpen des Restbrennstoffes mit einem Anteil heisser Luft von Seiten der zum Verbrennungsprozess 3 führenden Brennstoffleitung, bis das Brennstoffvolumen V1 erneut gefüllt ist. Ein Entleeren des Brennstoffvolumens V1 erfolgt nach Schliessen des Steuerventils 5 durch Öffnen des Ablassventils 7.

Die lösungsgemässen Massnahmen dienen somit einem kontrollierten Rückfliessen bzw. Rückpumpen des innerhalb des Brennstoffvolumens V2 verbleibenden Restbrennstoffes nach einer Unterbrechung der Brennstoffzufuhr. Der Abpumpvorgang erfolgt iterativ bis sich längs der zum Verbrennungsprozess führenden Brennstoffleitung die gleichen Druckverhältnisse einstellen wie am Drainage-Ort 8.

In einer bevorzugten Ausführungsvariante des Verfahrens wird zudem im Bereich des Steuerventils eine Temperaturmessung vorgenommen, um dafür Sorge zu tragen, dass in Fällen, in denen sich unkontrolliert heisse Verbrennungsprodukte von Seiten des Verbrennungsprozesses über die Brennstoffleitung in Richtung des Steuerventils 5 ausbreiten, sofort detektiert werden können, um den Prozess des kontrollierten Rückpumpens von Restbrennstoff zu unterbrechen. Auch kann mit Hilfe der Temperaturüberwachung der Mengenanteil an heisser Luft längs der zum Verbrennungsprozess führenden Brennstoffleitung überwacht werden, deren Anteil mit zunehmender Ablass-Abfolge und Dauer ansteigt und schliesslich über die Temperaturmessung zu einem Abstellen der Abpumpabfolge führt.

Das lösungsgemässe Prinzip des kontrollierten Rückpumpens von Restbrennstoffanteilen, die sich längs der zum Verbrennungsprozess 3 führenden Brennstoffleitung stromab des Steuerventils 5 befinden, erfordert keinerlei zusätzliche technische Komponenten, sondern lediglich ein die betreffenden Ventile in abgestimmter Weise aktivierendes Steuerprogramm. Somit lässt sich die lösungsgemässe Massnahme kostengünstig und ohne technische Zusatzmassnahmen sowohl bei Neuanlagen als auch bei bereits in Betrieb befindlichen Anlagen problemlos integrieren. Zudem trägt das lösungsgemässe Verfahrenskonzept dazu bei, die Betriebskosten von Wärmekraftmaschinen, allen voran Gas- und Dampfturbinenanlagen, zu reduzieren, zumal auf jegliche Spülmassnahmen mit den damit verbundenen Aufwendungen verzichtet werden können.

### Bezugszeichenliste

- 1: Brennstoffleitung
- 1': Brennstoffleitungsabschnitt
- 2: Brennstoffreservoir
- 3: Verbrennungsprozess, Brenner
- 4: Absperrventil
- 5: Steuerventil
- 6: Ablassleitung
- 6': Ablassleitungsabschnitt
- 7: Ablassventil
- 8: Drainage-Ort
- V1: Brennstoffvolumen
- V2: Brennstoffvolumen zwischen Steuerventil und Verbrennungsprozess

## Patentansprüche

1. Verfahren zum Betreiben einer Brennstoffversorgung für eine Wärmekraftmaschine, wobei die Brennstoffversorgung im Wesentlichen aus mindestens einer zu einem Verbrennungsprozess (3) führenden Brennstoffleitung (1) besteht, längs welcher mindestens eine Ventilgruppe angeordnet ist, wobei jede Ventilgruppe aus mindestens einem Absperrventil (4) und mindestens einem Steuerventil (5) besteht, wobei das Steuerventil (5) dem Verbrennungsprozess (3) näher liegend angeordnet ist und die beiden Ventile (4, 5) einen Brennstoffleitungsabschnitt (1') begrenzen, wobei von dem Brennstoffleitungsabschnitt (1') eine mit mindestens einem Ablassventil (7) ausgerüstete Ablassleitung (6', 6) abzweigt, welche zu einem Drainageort (8) führt, wobei für die Aufrechterhaltung der Brennstoffversorgung für den Betrieb der Wärmekraftmaschine das Absperrventil (4) und Steuerventil (5) geöffnet und das Ablassventil (7) geschlossen werden, wobei der Brennstoffleitungsabschnitt (1') zwischen Absperrventil (4) und Steuerventil (5) und die Ablassleitung (6') bis zum Ablassventil (7) ein Brennstoffvolumen (V1) bilden, wobei zur Unterbindung der Brennstoffversorgung und zur Leerung der stromauf des Verbrennungsprozesses befindlichen Brennstoffleitungen (1', 6') folgende Vorkehrungen in zeitlich aufeinander folgender Abfolge getroffen werden:
Schritt 1: Bei geschlossenem Ablassventil (7) Schliessen des Absperrventils (4) und des Steuerventils (5);
Schritt 2: Öffnen des Ablassventils (7) und Entleeren des sich im Brennstoffleitungsabschnitt (1') und in Ablassleitung (6') befindlichen Brennstoffvolumens (V1);
Schritt 3: Schliessen des Ablassventils (7);
Schritt 4: Öffnen des Steuerventils (5);
Schritt 5. Befüllen des Brennstoffvolumens (V1) durch einen druckgetriebenen Rückfluss des Brennstoffs aus dem Verbrennungsprozess (3);
Schritt 6. Schliessen des Steuerventils (5) und anschliessendes Öffnen des Ablassventils (7) zur Entleerung des nach Schritt 5 befüllten Brennstoffvolumens (V1).

2. Verfahren nach Anspruch 1, **dadurch gekennzeichnet, dass** die Schritte 3 bis 6 mindestens einmal wiederholt werden.

3. Verfahren nach einem der Ansprüche 1 bis 2, **dadurch gekennzeichnet, dass** die Schritte 3 bis 6 solange wiederholt werden, wie längs der Brennstoffleitung (1) zumindest zwischen dem geschlossenen Steuerventil (5) und dem Verbrennungsprozess (3) ein Leitungsdruck durch das dortige Brennstoffvolumen (V2) vorherrscht, der grösser ist als ein Leitungsdruck längs der Ablassleitung (6) bei geöffnetem Ablassventil (7).

4. Verfahren nach einem der Ansprüche 1 bis 3, **dadurch gekennzeichnet, dass** die Schritte 3 bis 6 n-fach wiederholt werden, mit n=V2N1.

5. Verfahren nach einem der Ansprüche 1 bis 4, **dadurch gekennzeichnet, dass** im Bereich des Steuerventils (5) eine Temperaturmessung vorgenommen wird, und dass die Schritte 3 bis 6 so lange wiederholt werden, wie ein Temperaturschwellwert nicht überschritten wird.

6. Verfahren nach einem der Ansprüche 1 bis 5, **dadurch gekennzeichnet, dass** als Warmekraftmaschine eine Gas- und/oder Dampfturbinenanordnung zum Einsatz kommt, die Ober mindestens eine Brennstoffleitung mit gasförmigen oder flüssigen Brennstoff versorgt wird.

7. Verfahren nach Anspruch 6, **dadurch gekennzeichnet, dass** eine Anzahl Brennstoffleitungen (1) geführt werden, welche mit unterschiedlichen Brennstoffen gespiesen werden.

## Claims

1. Method for operation of a fuel supply for a thermal engine, wherein the fuel supply substantially consists of at least one fuel line (1) leading to a combustion process (3), along which line at least one valve group is arranged, wherein each valve group consists of at least one shut-off valve (4) and at least one control valve (5), wherein the control valve (5) is arranged located closer to the combustion process (3) and the two valves (4, 5) delimit a fuel line portion (1'), wherein at least one discharge line (6', 6) equipped with at least one discharge valve (7) branches off the fuel line portion (1') and leads to a drainage site (8), wherein to maintain the fuel supply for the operation of the thermal engine, the shut-off valve (4) and control valve (5) are opened and the discharge valve (7) closed, wherein the fuel line portion (1') between the shut-off valve (4) and control valve (5), and the discharge line (6') up to the drainage valve (7) together form a fuel volume (VI), wherein to suppress the fuel supply and evacuate the fuel lines (1', 6') located upstream of the combustion process, the following precautionary measures are taken in temporally successive sequence:
Step 1: with the discharge valve (7) closed, closure of the shut-off valve (4) and control valve (5);
Step 2: opening of the discharge valve (7) and evacuation of the fuel volume (V1) present in the fuel line portion (1') and in the discharge line (6');
Step 3: closure of the drainage valve (7);
Step 4: opening of the control valve (5);
Step 5: filling of the fuel volume (V1) by a pressure-driven backflow of the fuel from the combustion process (3);
Step 6: closure of the control valve (5) and subsequent opening of the drainage valve (7) for evacuation of the fuel volume (V1) filled after step 5.

2. Method according to claim 1, **characterized in that** steps 3 to 6 are repeated at least once.

3. Method according to claims 1 to 2, **characterized in that** steps 3 to 6 are repeated as long as the line pressure predominating along the fuel line (1) at least between the closed control valve (5) and the combustion process (3), due to the fuel volume (V2) present therein, is greater than a line pressure along the discharge line (6) with the discharge valve (7) opened.

4. Method according to any of claims 1 to 3, **characterized in that** steps 3 to 6 are repeated n times, with n=V2/V1.

5. Method according to any of claims 1 to 4, **characterized in that** a temperature measurement is made in the region of the control valve (5) and that steps 3 to 6 are repeated as long as a temperature threshold value is not exceeded.

6. Method according to any of claims 1 to 5, **characterized in that** as a thermal engine, a gas and/or steam turbine arrangement is used which is supplied with gaseous or liquid fuel via at least one fuel line.

7. Method according to claim 6, **characterized in that** a number of fuel lines (1) are guided which are supplied with different fuels.

## Revendications

1. Procédé de fonctionnement d'une alimentation en carburant pour un moteur thermique, l'alimentation en carburant étant constitué essentiellement d'au moins une conduite de carburant (1) conduisant à un processus de combustion (3), le long de laquelle se trouve au moins un groupe de soupapes, chaque groupe de soupapes étant constitué d'au moins une soupape d'arrêt (4) et d'au moins une soupape de commande (5), la soupape de commande (5) se trouvant plus près du processus de combustion (3) et les deux soupapes (4, 5) délimitant une portion de conduite de carburant (1'), une conduite de vidange (6', 6), équipée d'une soupape de vidange (7), bifurquant à partir de la portion de conduite de carburant (1'), cette conduite de vidange conduisant à un lieu de drainage (8), la soupape d'arrêt (4) et la soupape de commande (5) étant ouvertes et la soupape de vidange (7) étant fermée pour le maintien de l'alimentation en carburant pour le fonctionnement du moteur thermique, la portion de conduite de carburant (1') formant, entre la soupape d'arrêt (4) et la soupape de commande (5) et la conduite de vidange (6') jusqu'à la soupape de vidange (7), un volume de carburant (V1), les mesures suivantes étant appliquées dans l'ordre chronologique pour inhiber l'alimentation en carburant et pour vider les conduites de carburant (1', 6') se trouvant en amont du processus de combustion :
Étape 1 : lorsque la soupape de vidange (7) est fermée, fermeture de la soupape d'arrêt (4) et de la soupape de commande (5) ;
Étape 2 : ouverture de la soupape de vidange (7) et vidange du volume de carburant (V1) se trouvant dans la portion de conduite de carburant (1') et dans la conduite de vidange (6') ;
Étape 3 : fermeture de la soupape de vidange (7) ;
Étape 4 : ouverture de la soupape de commande (5) ;
Étape 5 : remplissage du volume de carburant (V1) par un retour, commandé par la pression, du carburant à partir du processus de combustion (3) ;
Étape 6 : fermeture de la soupape de commande (5) puis ouverture de la soupape de vidange (7) pour la vidange du volume de carburant (V1) rempli après l'étape 5.

2. Procédé selon la revendication 1, **caractérisé en ce que** les étapes 3 à 6 sont répétées au moins une fois.

3. Procédé selon l'une des revendications 1 à 2, **caractérisé en ce que** les étapes 3 à 6 sont répétées tant que, le long de la conduite de carburant (1 ), au moins entre la soupape de commande (5) fermée et le processus de combustion (3), une pression de conduite règne à travers le volume de carburant (V2) qui s'y trouve, qui est supérieure à une pression de conduite le long de la conduite de vidange (6) lorsque la soupape de vidange (7) est ouverte.

4. Procédé selon l'une des revendications 1 à 3, **caractérisé en ce que** les étapes 3 à 6 sont répétées n fois, avec n = V2 / V1.

5. Procédé selon l'une des revendications 1 à 4, **caractérisé en ce que**, au niveau de la soupape de commande (5), une mesure de température est effectuée et **en ce que** les étapes 3 à 6 sont répétées tant qu'une valeur seuil de température n'est pas dépassée.

6. Procédé selon l'une des revendications 1 à 5, **caractérisé en ce que**, en tant que moteur thermique, un dispositif à turbine à gaz et/ou à vapeur est utilisé, qui est alimenté par l'intermédiaire d'au moins une conduite de carburant avec un carburant gazeux ou liquide.

7. Procédé selon la revendication 6, **caractérisé en ce que** plusieurs conduites de carburant (1), alimentées avec des carburants différents, sont prévues.
